# FASCICULE DE BREVET EUROPEEN

(11) **EP 2 096 270 B1**
(45) Date de publication et mention de la délivrance du brevet: **12.06.2013**
(21) Numéro de dépôt: 09150024.9
(22) Date de dépôt: 05.01.2009
(51) Int. Cl.: F01D 25/06, F01D 5/10, F16F 15/12, F16B 21/18

(54) **Jonc annulaire fendu pour piece tournante de turbomachine**
Geschlitztes Ringrohr für Drehteil eines Turbotriebwerks
Split annular trim strip for rotating part of turbomachine

(30) Priorité: 27.02.2008 FR 0801067
(43) Date de publication de la demande: 02.09.2009
(73) Titulaire: Snecma, 75015 Paris (FR)
(72) Inventeur: Cloarec, Yvon, 77250 Ecuelles (FR)
(74) Mandataire: Ramey, Daniel

(56) Documents cités:
- DE-U1- 29 710 999
- FR-A- 1 020 209
- FR-A- 2 674 299
- FR-A- 2 888 876
- FR-A- 2 888 877

## Description

La présente invention concerne un jonc annulaire destiné à être monté sur un élément de rotor de turbomachine et qui est soumis à un champ de forces centrifuges en fonctionnement, ce jonc étant destiné, par exemple à la rétention d'un organe, à l'amortissement des vibrations, ou à assurer une étanchéité.

Il est connu par exemple d'amortir les vibrations d'un élément de rotor de turbomachine au moyen d'un jonc métallique fendu monté élastiquement contraint dans une gorge annulaire d'un élément de rotor, l'ouverture de la gorge étant tournée vers l'axe de rotation du rotor. Ce jonc fendu présente à l'état libre sans contrainte un diamètre extérieur supérieur au diamètre du fond de la gorge et est resserré sur lui-même afin de diminuer son rayon de courbure pour être monté dans la gorge et exercer une pression sur le fond de celle-ci.

Le fonctionnement de la turbomachine provoque des micromouvements et des frottements du jonc dans la gorge annulaire du rotor, qui dissipent de l'énergie et amortissent au moins partiellement les phénomènes vibratoires et les instabilités qui sont la cause des micro-mouvements et des frottements du jonc.Cependant, la déformation élastique du jonc dans la gorge n'est pas uniforme sur toute son étendue circonférentielle et se traduit par un fléchissement qui est sensiblement nul aux extrémités du jonc et qui augmente vers la partie du jonc diamétralement opposée à la fente. Ainsi, quand le jonc est monté dans la gorge annulaire, le défaut de fléchissement des parties d'extrémité ne leur permet pas de venir en contact avec le fond de la gorge annulaire car le rayon de courbure externe de ces parties d'extrémité reste supérieur à celui du fond de la gorge, seules les extrémités du jonc étant en appui sur le fond de la gorge, ce qui peut conduire à une usure locale de la partie de la gorge en contact avec les extrémités du jonc annulaire.

Lors du fonctionnement de la turbomachine, de l'air ou des gaz utilisés pour la combustion et la poussée peuvent circuler entre les pièces fixes et les pièces tournantes, et s'échapper vers l'intérieur de la turbomachine pour passer entre le fond de la gorge annulaire et les parties d'extrémité du jonc qui ne sont pas en contact avec la gorge. Des particules solides véhiculées par cet air et par ces gaz peuvent ainsi se loger entre les parties d'extrémité du jonc et le fond de la gorge.

Lors de la rotation du rotor, les parties d'extrémité du jonc sont appliquées sur le fond de la gorge annulaire par les forces centrifuges. Ces forces ne sont pas suffisamment importantes pour détruire les particules solides intercalées entre le fond de la gorge et le jonc, mais elles appliquent ces particules solides sur le fond de la gorge avec une pression relativement élevée, ce qui conduit à endommager le jonc et/ou le rotor, et limite la durée de vie de ces pièces.

Le document FR2674899, décrit un anneau d'arrêt élastique fendu monté dans une gorge annulaire d'un corps annulaire à l'intérieur duquel est monté un arbre, l'anneau assurant le blocage axial de l'arbre à l'intérieur du corps annulaire. A l'état non contraint, les parties d'extrémité du jonc ont des rayons qui sont inférieurs au rayon de la gorge.

Le document DE 29710999, décrit un circlip destiné au blocage axial d'une pièce dans un perçage. A l'état libre sans contrainte, le rayon des parties d'extrémité du circlip est inférieur au rayon du reste du circlip, ce qui permet lors de sa compression radiale puis de son insertion à l'intérieur du perçage que le circlip appui sur toute sa circonférence à l'intérieur du perçage. L'invention a notamment pour but d'apporter à ce problème une solution simple, efficace et économique.

Elle propose à cet effet, un jonc annulaire fendu pour pièce tournante de turbomachine, destiné à être monté précontraint élastiquement dans une gorge annulaire de la pièce tournante ouverte vers l'axe de rotation et ayant à l'état libre un diamètre supérieur à celui de la gorge, caractérisé en ce qu'à l'état libre sans contrainte, les parties d'extrémité du jonc sont des arcs de cercle ayant un rayon de courbure sensiblement égal à celui de la gorge annulaire.

Comme la déformation du jonc n'est pas répartie de manière uniforme sur le pourtour du jonc et est quasi-nulle au niveau des parties d'extrémité du jonc, la réalisation de ces parties d'extrémité avec un rayon de courbure sensiblement égal à celui de la gorge annulaire permet d'assurer un contact étroit entre ces parties d'extrémité et le fond de la gorge annulaire. Ainsi, ce contact étant réalisé au montage, l'air et les gaz circulant à l'intérieur de la turbomachine ne peuvent plus passer entre le jonc et le fond de la gorge et aucune particule solide ne peut s'y déposer, ce qui évite un endommagement de la pièce tournante et du jonc.

Les parties d'extrémité du jonc ont avantageusement à l'état libre un rayon de courbure externe égal à celui du fond de la gorge annulaire.

Selon une autre caractéristique de l'invention, le rayon de courbure externe des parties d'extrémité du jonc est à l'état libre légèrement inférieur au rayon du fond de la gorge, ce qui permet d'assurer un contact de la majeure partie du jonc avec le fond de la gorge au repos, les extrémités du jonc venant en contact avec le fond de la gorge lors du fonctionnement de la turbomachine, sous l'effet des forces centrifuges.

L'étendue angulaire des parties d'extrémité du jonc en arc de cercle est fonction de la rigidité du jonc et du diamètre de la gorge annulaire dans laquelle il doit être inséré.

Dans un exemple d'application pratique de l'invention, les parties d'extrémité du jonc ont chacune une étendue angulaire inférieure à 40°, cette étendue angulaire étant préférentiellement comprise entre 20° et 30°.

Selon une autre caractéristique de l'invention, les parties d'extrémité du jonc sont raccordées à des parties en arc de cercle de rayon de courbure supérieur à celui du fond de la gorge annulaire.

En effet, la déformation du jonc au montage étant maximale au niveau des parties du jonc éloignées de la fente, il est préférable de conserver dans ces parties à l'état libre un rayon de courbure supérieur à celui du fond de la gorge annulaire.

L'invention concerne également un rotor, en particulier de turbomachine, comprenant au moins un disque portant à sa périphérie une pluralité d'aubes et au moins un jonc fendu du type décrit ci-dessus, logé dans une gorge annulaire du disque.

L'invention peut être appliquée à une pièce tournante de turbomachine, comprenant une gorge annulaire dans laquelle est monté un jonc annulaire fendu tel que précédemment décrit.

L'invention concerne encore une turbomachine, telle qu'un turboréacteur ou un turbopropulseur d'avion, comprenant des joncs annulaires fendus tels que décrits précédemment.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique partielle en coupe axiale d'un rotor de turbomachine équipé de joncs d'amortissement des vibrations ;
- la figure 2 est une vue schématique en coupe axiale d'un jonc annulaire fendu monté dans une gorge annulaire selon la technique antérieure ;
- la figure 3 est une vue schématique en coupe axiale d'un jonc annulaire selon l'invention monté dans une gorge annulaire.

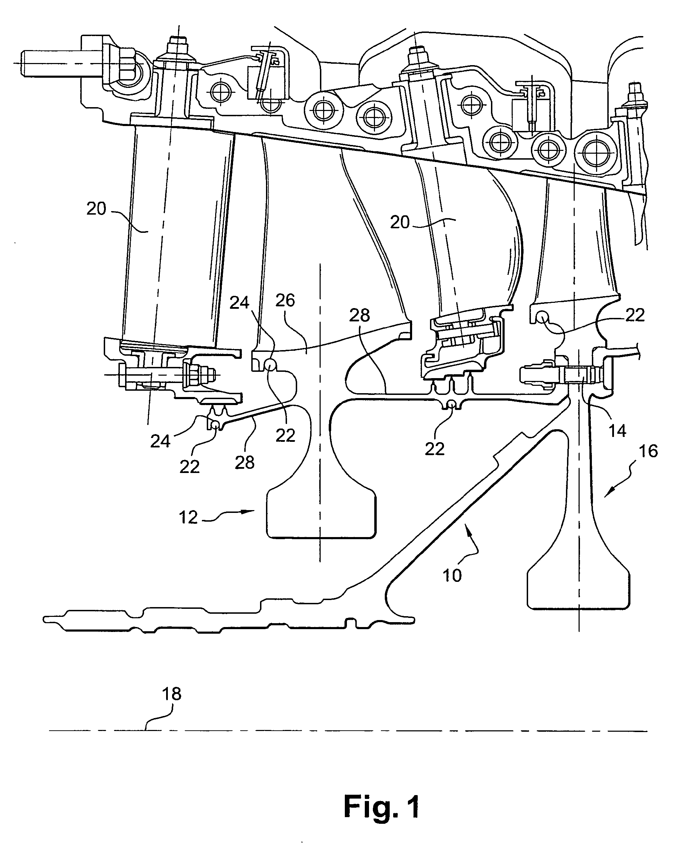

En figure 1, on a représenté une partie d'un compresseur haute pression de turboréacteur, qui comprend un rotor 10 comportant un disque aubagé monobloc 12 fixé par des boulons 14 à un autre disque aubagé monobloc 16 entraîné en rotation par un arbre non représenté d'axe 18, le compresseur haute pression comprenant également des étages d'aubes fixes 20 de redressement disposés en alternance avec les disques 12 et 16 du rotor, ces derniers étant équipés de joncs 22 d'amortissement des vibrations qui sont montés dans des gorges annulaires 24, formées dans les plates-formes 26 des disques 12, 16 et dans des parois cylindriques 28 solidaires de ces disques.

Ces joncs 22 sont fendus et ont à l'état libre un rayon supérieur au rayon moyen du fond des gorges annulaires 24, dans lesquelles ils doivent être insérés. Avant montage dans une gorge 24, une contrainte élastique est appliquée au jonc 22 pour le resserrer sur lui-même et diminuer son rayon afin de l'insérer dans la gorge 24. Quand il est placé dans la gorge, le jonc 22 se détend et s'applique sur le fond de la gorge annulaire 24.

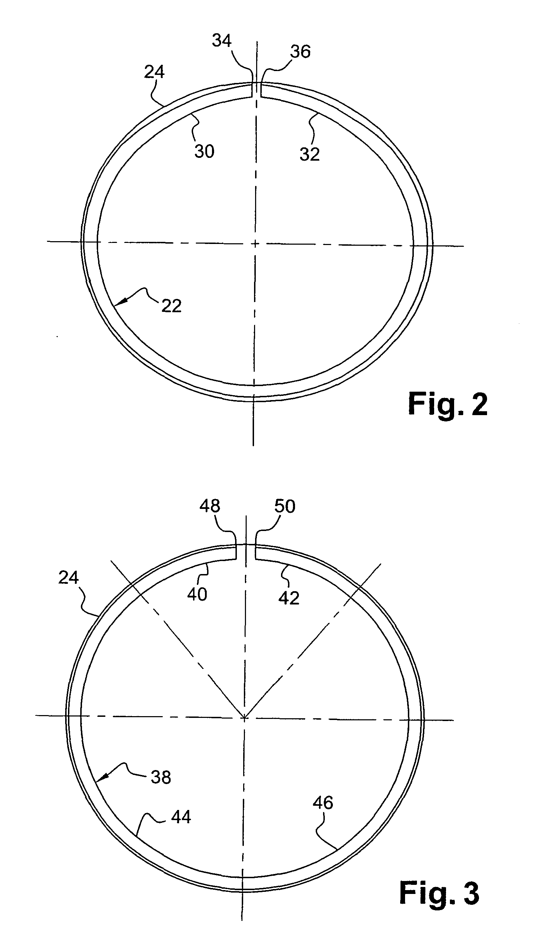

Cependant, on constate que la déformation du jonc 22 dans la gorge 24 n'est pas circonférentiellement uniforme, et est quasi-nulle au niveau des parties d'extrémité 30, 32 du jonc 22 (figure 2). Le rayon de courbure des parties d'extrémité 30, 32 reste supérieur à celui du fond de la gorge annulaire 24, ce qui ne permet pas d'assurer un contact entre les parties d'extrémité 30, 32 et le fond de la gorge annulaire 24. Seules les extrémités 34, 36 du jonc 22 sont en appui sur le fond de la gorge annulaire 24 et les parties d'extrémité 30, 32 du jonc 22 se comportent comme des poutres quasi-rectilignes, en créant entre elles et le fond de la gorge 24 des espaces dans lesquels des particules solides véhiculées par l'air peuvent se déposer. Ces particules solides sont comprimées entre le jonc 22 et le fond de la gorge 24 par les forces centrifuges en fonctionnement et y forment des empreintes relativement profondes.

En fonctionnement, les vibrations et les instabilités de rotation du rotor induisent des micro-mouvements du jonc 22 dans la gorge 24 qui ont pour conséquence une détérioration et une usure relativement rapides du jonc 22 et du fond de la gorge 24.

L'utilisation d'un jonc annulaire 38 dont les parties d'extrémité 40, 42 sont, à l'état libre, des arcs de cercle ayant un rayon de courbure externe sensiblement égal à celui de la gorge annulaire 24, permet de garantir un contact des parties d'extrémité 40, 42 lors de l'insertion du jonc 38 avec le fond de la gorge 24 et évite le dépôt de particules solides entre le jonc 38 et le fond de la gorge annulaire 24 (figure 3).

Les parties d'extrémités 40, 42 du jonc 38 sont raccordées à des parties en arcs de cercle 44, 46 ayant à l'état libre un rayon de courbure supérieur à celui du fond de la gorge 24.

Lors du montage, une contrainte maximale est appliquée aux parties en arcs de cercle 44, 46 dont le rayon de courbure diminue suffisamment pour que le jonc 38 puisse être inséré dans la gorge annulaire 24. La détente élastique du jonc 38 dans la gorge 24 a pour effet de plaquer les parties en arcs de cercle 44, 46 sur le fond de la gorge 24. Les parties d'extrémités 40, 42 raccordées aux parties en arcs de cercle 44, 46 sont quant à elles mises en contact continu avec le fond de la gorge 24 grâce au fait que leur rayon de courbure est sensiblement égal à celui du fond de la gorge annulaire 24.

Avantageusement, les parties d'extrémité 40, 42 ont, à l'état libre, un rayon de courbure externe exactement égal à celui du fond de la gorge annulaire 24 afin de garantir un contact optimal entre les parties d'extrémités 40, 42 et le fond de la gorge 24.

En variante, à l'état libre, le rayon de courbure externe des parties d'extrémité 40, 42 peut être légèrement inférieur à celui du fond de la gorge 24. Dans ce cas, lors du montage du jonc 38 dans la gorge annulaire 24, les parties d'extrémité 40, 42 viendront en contact avec le fond de la gorge annulaire 24. Les extrémités 48, 50 du jonc 38 viendront en contact avec le fond de la gorge annulaire 24 pendant le fonctionnement dès que la force centrifuge sera suffisante pour plaquer les extrémités 48, 50 sur le fond de la gorge 24. Dans cette configuration, la totalité des parties d'extrémité 40, 42 est amenée au contact avec le fond de la gorge annulaire 24 dès le début du fonctionnement de la turbomachine, ce qui procure le même résultat que dans le mode de réalisation précédent.

L'étendue angulaire des parties d'extrémité en arc de cercle du jonc est fonction de la rigidité du jonc et du diamètre de la gorge annulaire dans laquelle le jonc est destiné à être inséré.Dans un exemple d'application pratique de l'invention, les parties d'extrémités 40, 42 ont une étendue angulaire inférieure à 40° et préférentiellement comprise entre 20° et 30°.

L'invention n'est pas limitée aux joncs annulaires d'amortissement et le jonc décrit ci-dessus peut également être utilisé pour assurer l'étanchéité entre différentes pièces de la turbomachine et pour retenir des organes sur des pièces tournantes, telles notamment que des pignons, des éléments de palier, etc.

## Revendications

1. Rotor (10), comprenant au moins un disque (12) portant à sa périphérie une pluralité d'aubes et au moins un jonc annulaire (38) fendu monté précontraint élastiquement dans une gorge annulaire (24) du disque (12) ouverte vers l'axe de rotation (18) et ayant à l'état libre un diamètre supérieur à celui de la gorge (24), **caractérisé en ce qu'**à l'état libre sans contrainte, les parties d'extrémité (40, 42) du jonc (38) sont des arcs de cercle ayant un rayon de courbure sensiblement égal à celui de la gorge annulaire (24).

2. Rotor selon la revendication 1, **caractérisé en ce que** les parties d'extrémité (40, 42) du jonc (38) à l'état libre ont un rayon de courbure externe égal à celui du fond de la gorge annulaire (24).

3. Rotor selon la revendication 1, **caractérisé en ce que** le rayon de courbure externe des parties d'extrémité (40, 42) du jonc (38) est à l'état libre inférieur au rayon du fond de la gorge (24).

4. Rotor selon la revendications 1 à 3, **caractérisé en ce que** les parties d'extrémité (40, 42) du jonc (38) ont chacune une étendue angulaire inférieure à 40°.

5. Rotor selon l'une des revendications 1 à 4, **caractérisé en ce que** les parties d'extrémité (40, 42) du jonc (38) ont chacune une étendue angulaire comprise entre 20° et 30°.

6. Rotor selon l'une des revendications 1 à 5, **caractérisé en ce que** les parties d'extrémité (40, 42) du jonc (38) sont raccordées à des parties en arc de cercle (44, 46) de rayon de courbure supérieur à celui du fond de la gorge annulaire.

7. Turbomachine, telle qu'un turboréacteur ou un turbopropulseur d'avion, **caractérisée en ce qu'**elle comprend un rotor (10) selon l'une des revendications 1 à 6.

## Patentansprüche

1. Rotor (10), enthaltend zumindest eine Scheibe (12), die an ihrem Umfang eine Mehrzahl von Schaufeln trägt, und zumindest einen geschlitzten Sicherungsring (38), der unter Federvorspannung in einer zur Drehachse (18) hin offenen, ringförmigen Nut (24) der Scheibe (12) gelagert ist und im freien Zustand einen Durchmesser hat, der größer als derjenige der Nut (24) ist, **dadurch gekennzeichnet, dass** im spannungslosen, freien Zustand die Endabschnitte (40, 42) des Sicherungsrings (38) Kreisbögen sind, die einen Krümmungsradius haben, der im wesentlichen gleich demjenigen der ringförmigen Nut (24) ist.

2. Rotor nach Anspruch 1, **dadurch gekennzeichnet, dass** die Endabschnitte (40, 42) des Sicherungsrings (38) im freien Zustand einen äußeren Krümmungsradius haben, der gleich demjenigen des Nutgrunds der ringförmigen Nut (24) ist.

3. Rotor nach Anspruch 1, **dadurch gekennzeichnet, dass** der äußere Krümmungsradius der Endabschnitte (40, 42) des Sicherungsrings (38) im freien Zustand kleiner als der Radius des Nutgrunds der ringförmigen Nut (24) ist.

4. Rotor nach Anspruch 1 bis 3, **dadurch gekennzeichnet, dass** die Endabschnitte (40, 42) des Sicherungsrings (38) jeweils eine Winkelerstreckung von unter 40° haben.

5. Rotor nach einem der Ansprüche 1 bis 4, **dadurch gekennzeichnet, dass** die Endabschnitte (40, 42) des Sicherungsrings (38) jeweils eine Winkelerstreckung von zwischen 20° und 30° haben.

6. Rotor nach einem der Ansprüche 1 bis 5, **dadurch gekennzeichnet, dass** die Endabschnitte (40, 42) des Sicherungsrings (38) mit Kreisbogenabschnitten (44, 46) verbunden sind, deren Krümmungsradius größer als derjenige des Nutgrunds der ringförmigen Nut ist.

7. Turbomaschine bzw. Turbotriebwerk, wie etwa Turbostrahltriebwerk oder Turbopropellertriebwerk für Flugzeuge, **dadurch gekennzeichnet, dass** sie bzw. es einen Rotor (10) nach einem der Ansprüche 1 bis 6 aufweist.

## Claims

1. A rotor (10) comprising at least one disk (12) carrying at its periphery a plurality of blades and at least one annular split ring (38), mounted with elastic prestress in an annular groove (24) of the disk (12), which groove is open towards the axis (18) of rotation, the ring presenting in the free state a diameter that is greater than that of the groove (24), **characterized in that** in the free state and without stress, the end portions (40, 42) of the ring (38) are circular arcs having a radius of curvature that is substantially equal to the radius of curvature of the annular groove (24).

2. A rotor according to claim 1, **characterized in that** the end portions (40, 42) of the ring (38) in the free state present an outer radius of curvature that is equal to the radius of curvature of the bottom of the annular groove (24).

3. A rotor according to claim 1, **characterized in that** the outer radius of curvature of the end portions (40, 42) of the ring (38) in the free state is less than the radius of the bottom of the groove (24).

4. A rotor according to any one of claim 1 to 3, **characterized in that** each of the end portions (40, 42) of the ring (38) presents an angular extent of less than 40°.

5. A rotor according to any one of claim 1 to 4, **characterized in that** each of the end portions (40, 42) of the ring (38) presents an annular extent lying in the range 20° to 30°.

6. A rotor according to any one of claim 1 to 5, **characterized in that** the end portions (40, 42) of the ring (38) are connected to circularly arcuate portions (40, 42) of radius of curvature greater than the radius of curvature of the bottom of the annular groove.

7. A turbomachine such as an airplane turbojet or turboprop, **characterized in that** it comprises one rotor according to any one of claim 1 to 6.
